# EUROPÄISCHE PATENTANMELDUNG

(11) **EP 3 835 027 A1**
(43) Veröffentlichungstag der Anmeldung: **16.06.2021**
(21) Anmeldenummer: 19215216.3
(22) Anmeldetag: 11.12.2019
(51) Int. Cl.: B29C 48/07, B29C 48/90, B29C 48/355, B32B 37/20, B29C 48/88, B29C 43/24

(54) **VERFAHREN UND VORRICHTUNG ZUR HERSTELLUNG EINES DEKORIERTEN WAND- ODER BODENPANEELS**

(71) Anmelder: Akzenta Paneele + Profile GmbH, 56759 Kaisersesch (DE)
(72) Erfinder: Hannig, Hans-Jürgen, 51427 Bergisch Gladbach (DE); Hoff, Egon, 56869 Mastershausen (DE); Hüllenkremer, Felix, 56076 Koblenz (DE)
(74) Vertreter: Michalski Hüttermann & Partner Patentanwälte mbB

(57) **Zusammenfassung**

Verfahren zur Herstellung eines dekorierten Wand- oder Bodenpaneels, aufweisend die Verfahrensschritte:

a) Bereitstellen einer geschmolzenen Polymermasse;

b) Extrudieren der geschmolzenen Polymermasse durch eine Düse (5);

c) Kalibrieren der geschmolzenen Polymermasse unter Ausbildung eines plattenförmigen Trägers (9) mittels einer Anordnung aus mehreren rotierbaren Walzen (6, 7), wobei die einzelnen Walzen (6, 7) über- oder hintereinander angeordnet sind und jede einzelne Walze (6, 7) mit benachbarten Walzen (6, 7) mindestens einen Kalibrierspalt ausbildet durch welchen die geschmolzene Polymermasse (9) geführt wird, wobei die Kalibrierspalt-Höhen über eine horizontale und/oder vertikale Bewegung einzelner Walzen (6, 7) während des Herstellungsprozesses variabel einstellbar sind;

d) Aufbringen eines eine Dekorvorlage nachbildenden Dekors auf zumindest einen Teilbereich des zumindest teilweise kalibrierten Trägers, und

e) Aufbringen einer Schutzschicht auf zumindest einen Teilbereich des Dekors.

Gegenstand der vorliegenden Erfindung ist ferner eine Vorrichtung zur Herstellung eines dekorierten Wand- oder Bodenpaneels sowie ein Wand- oder Bodenpaneel, welches gemäß dem vorbeschriebenen Verfahren hergestellt ist.

## Beschreibung

Die vorliegende Erfindung betrifft ein Verfahren zur Herstellung eines dekorierten Wand- oder Bodenpaneels, aufweisend die Verfahrensschritte:
a) Bereitstellen einer geschmolzenen Polymermasse;
b) Extrudieren der geschmolzenen Polymermasse durch eine Düse;
c) Kalibrieren der geschmolzenen Polymermasse unter Ausbildung eines plattenförmigen Trägers mittels einer Anordnung aus mehreren rotierbaren Walzen, wobei die einzelnen Walzen über- oder hintereinander angeordnet sind und jede einzelne Walze mit benachbarten Walzen mindestens einen Kalibrierspalt ausbildet durch welchen die geschmolzene Polymermasse geführt wird, wobei die Kalibrierspalt-Höhen über eine horizontale und/oder vertikale Bewegung einzelner Walzen während des Herstellungsprozesses variabel einstellbar sind;
d) Aufbringen eines eine Dekorvorlage nachbildenden Dekors auf zumindest einen Teilbereich des zumindest teilweise kalibrierten Trägers, und
e) Aufbringen einer Schutzschicht auf zumindest einen Teilbereich des Dekors.

Gegenstand der vorliegenden Erfindung ist ferner eine Vorrichtung zur Herstellung eines dekorierten Wand- oder Bodenpaneels sowie ein Wand- oder Bodenpaneel, welches gemäß dem vorbeschriebenen Verfahren hergestellt ist.

Dekorierte Platten sind an sich bekannt und diese werden beispielsweise im Innenausbau als Boden oder Wandbelag genutzt. Unter dem Begriff Wandpaneel sind dabei auch Paneele zu verstehen, welche zur Deckenbekleidung geeignet sind. Die Paneele bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Verfahren zur Herstellung von Paneelen weisen üblicherweise mehrere Verfahrensschritte auf. Beispielsweise kann über eine Streumaschine ein "Kuchen" aus Granulatpellets auf das Unterband einer Presse aufgebracht werden. Dieser Kuchen wird im Zuge der Herstellung üblicherweise in eine heiße Bandpresse mit Stahl- und/oder Teflonbändern geführt, in welcher das Aufheizen und Aufschmelzen der Granulatpellets erfolgt. Gleichzeitig zum Schmelzen kann das Material gepresst und in Form eines Trägers gebracht werden. Anschließend wird durch kontrolliertes Abkühlen eine Erstarrung bzw. Kristallisation des Trägermaterials herbeigeführt, wobei die Abwärme weitgehend ungenutzt bleibt, da die nutzbare Temperaturdifferenz durch das kontrollierte Abkühlen für eine anderweitige Nutzung zu gering ist. Die Wärmeübertragung erfolgt in diesem Bandpressverfahren von oben und unten durch Kontakt mit der Presse. Für das Abkühlen ist zudem nachteilig, dass die Wärme durch das glasfaserverstärkte Teflon-Band gelangen muss. Erst danach erfolgt die Wärmeübertragung durch Wärmeleitung in die Granulatschüttung, bzw. das Trägermaterial. Diese physikalischen Vorgänge sind sehr langsam, weil der Pelletkuchen zunächst noch Luft aus der Granulatschüttung enthält, welche produktphysikalisch nur langsam aus dem Träger herausgepresst werden darf. Um akzeptable Bandgeschwindigkeiten in der Produktion zu erreichen, muss ein hohes Temperaturgefälle zur Kühlung angelegt werden, welches zu erheblichen Abwärmeverlusten führt.

Ein mögliches Verfahren zur Herstellung eines dekorierten Wand- oder Bodenpaneels, ist beispielsweise in der EP3140129 B1 beschrieben. Das Verfahren weist die Verfahrensschritte auf:
a) Bereitstellen eines schüttfähigen Trägermaterials, insbesondere eines Granulats,
b) Anordnen des Trägermaterials zwischen zwei bandartigen Fördermitteln,
c) Formen des Trägermaterials unter Einwirkung von Temperatur unter Ausbildung eines bahnförmigen Trägers,
d) Komprimieren des Trägers,
e) Behandeln des Trägers unter Einwirkung von Druck unter Verwendung einer Zweibandpresse, wobei der Träger in oder vor der Zweibandpresse gekühlt wird,
f) gegebenenfalls weiteres Abkühlen des Trägers,
g) gegebenenfalls Aufbringen eines Dekoruntergrunds auf zumindest einen Teilbereich des Trägers;
h) Aufbringen eines eine Dekorvorlage nachbildenden Dekors auf zumindest einen Teilbereich des Trägers,
i) Aufbringen einer Schutzschicht auf zumindest einen Teilbereich des Dekors,
j) gegebenenfalls Strukturieren der Schutzschicht zum Einfügen von Poren und/oder des Randbereichs des Trägers zum Ausbilden von Verbindungselementen, und
k) gegebenenfalls Behandeln des Trägers zur elektrostatischen Entladung vor einem der vorgenannten Verfahrensschritte.

Die Herstellung von Paneelen kann noch weiteres Verbesserungspotential bieten.

Es ist daher die Aufgabe der vorliegenden Erfindung, ein verbessertes Verfahren zur Herstellung von dekorierten Wand- oder Bodenpaneelen bereitzustellen.

Gelöst wird diese Aufgabe durch ein Verfahren gemäß Anspruch 1 und durch eine Vorrichtung gemäß Anspruch 9. Hinsichtlich des Wand- oder Bodenpaneels wird die Aufgabe durch ein Paneel gemäß Anspruch 10 gelöst.

Mit der Erfindung wird somit ein Verfahren zur Herstellung eines dekorierten Wand- oder Bodenpaneels vorgeschlagen, aufweisend die Verfahrensschritte:
a) Bereitstellen einer geschmolzenen Polymermasse;
b) Extrudieren der geschmolzenen Polymermasse durch eine Düse;
c) Kalibrieren der geschmolzenen Polymermasse unter Ausbildung eines plattenförmigen Trägers mittels einer Anordnung aus mehreren rotierbaren Walzen, wobei die einzelnen Walzen über- oder hintereinander angeordnet sind und jede einzelne Walze mit benachbarten Walzen mindestens einen Kalibrierspalt ausbildet durch welchen die geschmolzene Polymermasse geführt wird, wobei die Kalibrierspalt-Höhen über eine horizontale und/oder vertikale Bewegung einzelner Walzen während des Herstellungsprozesses variabel einstellbar sind;
d) Aufbringen eines eine Dekorvorlage nachbildenden Dekors auf zumindest einen Teilbereich des zumindest teilweise kalibrierten Trägers, und
e) Aufbringen einer Schutzschicht auf zumindest einen Teilbereich des Dekors.
Überraschenderweise wurde gefunden, dass das vorstehend beschriebenes Verfahren eine verbesserte Herstellung eines Wand- beziehungsweise Bodenpaneels ermöglicht. Durch die Aggregation der Verfahrensschritte lassen sich qualitativ hochwertige Paneele mit verbesserten Dekoreigenschaften innerhalb sehr kurzer Prozesszeiten erhalten. Die Paneele weisen insbesondere durch den erfindungsgemäßen Kalibrierschritt besonders ebenmäßige Trägeroberflächen auf, auf welchen sich besonders effizient qualitativ hochwertige Dekore aufbringen lassen. Ohne durch die Theorie gebunden zu sein, zeigen erfindungsgemäß aufgebrachte Dekore aufgrund der besonders glatten und fehlerfreien Oberfläche des Trägermaterials besonders hochwertige optische Eigenschaften. Die oben angegebene Verfahrensweise ermöglicht zudem einen hohen Durchsatz mit hohen Bahngeschwindigkeiten und verringert den Anteil nicht konformer Paneele. Insbesondere lässt sich über die erfindungsgemäße Integration des Walzen-Kalibrierschritts in die Herstellung der Anteil an Lufteinschlüssen an der Paneel-Oberfläche reduzieren, welches wahrscheinlich auf eine verbesserte Entfernung im Träger vorhandener sowie einem verbesserten Ausschluss von Luft in den Walzenspalten zurückgeführt werden kann. Neben den direkten Prozessvorteilen lassen sich durch das flexible Verfahren unter Einsatz individuell steuerbarer Walzen auch die Rüst- und Einfahrzeiten der Anlage verkürzen, welches in einer höheren Verfahrenseffizienz mündet. Des Weiteren lässt sich über gerade über den erfindungsgemäßen Kalibrierteilschritt auch ein größerer Anteil der Prozessenergie zurückgewinnen, welches insgesamt zu einem kleineren CO₂-Fußabdruck des genutzten Verfahrens und somit auch des hergestellten Paneels beiträgt.

Das erfindungsgemäße Verfahren ist ein Verfahren zur Herstellung eines dekorierten Wand- oder Bodenpaneels. Unter dem Begriff "dekoriertes Wand- oder Bodenpaneel" beziehungsweise "Dekorpaneel" sind im Sinne der Erfindung insbesondere Wand-, Decken, oder Bodenpaneele zu verstehen, welche ein auf eine Trägerplatte aufgebrachtes, eine Dekorvorlage nachbildendes Dekor, aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus können Naturwerkstoffe wie Steine oder Keramiken nachempfunden werden.

Entsprechend kann unter einer "Dekorvorlage" im Sinne der vorliegenden Erfindung insbesondere verstanden werden, dass ein derartiger Naturwerkstoff beziehungsweise zumindest dessen Oberfläche durch das Dekor imitiert beziehungsweise nachempfunden werden soll.

Der Verfahrensschritt a) umfasst das Bereitstellen einer geschmolzenen Polymermasse. Die geschmolzene Polymermasse zeigt, zumindest teilweise, die Eigenschaften einer fließfähigen viskosen Flüssigkeit und kann beispielsweise durch einen thermischen Behandlungsschritt von üblicherweise als Granulat vorliegenden Polymeren erhalten werden. Die geschmolzene Polymermasse kann dabei aus nur einer homogenen oder aus mehreren Polymermassen bestehen, welche miteinander vermischt oder in einer definierten Form übereinander geschichtet (Feedblock) vorliegen. Unter einem "Granulat" beziehungsweise einem "granulären Material" kann dabei ein Feststoff beziehungsweise ein Haufwerk eines Feststoffs verstanden werden, welcher eine Vielzahl fester Partikel, wie etwa Körner oder Kugeln, umfasst oder daraus besteht. Beispielhaft aber nicht abschließend seien hier körnige oder pulverförmige Materialien genannt oder als Mahlgüter vorliegende geeignete Recyclingmaterialien.

Die Polymermasse oder das Granulat kann ein Trägermaterial auf Basis eines Kunststoffs, eines Compounds auf Basis anorganischer Füllstoffe oder eines Holz-Kunststoff-Komposit-Werkstoffs (WPC) aufweisen. Beispielsweise kann die geschmolzene Polymermasse und damit auch die Trägerplatte im Wesentlichen aus einem thermoplastischen, elastomeren oder duroplastischen Kunststoff ausgebildet sein. Des Weiteren sind Recyclingwerkstoffe aus den genannten Materialien im Rahmen des erfindungsgemäßen Verfahrens einsetzbar. Bevorzugt als geschmolzene Polymermasse können dabei insbesondere thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese. Dabei können unabhängig von dem Grundmaterial des Trägers beispielsweise Weichmacher vorgesehen sein, die etwa in einem Bereich von ≥ 0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Geeignete Weichmacher umfassen etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate oder Blends mit thermoplastischen Elastomeren (TPEs) vorgesehen sein.

Zur Herstellung einer geschmolzenen Polymermasse können beispielhaft ein oder mehrere sogenannte Dryblends aufgeschmolzen werden, also trockene Kunststoffpulver mit Zuschlagstoffen. Als Zuschlagsstoffe kommen beispielsweise auch "Faserwerkstoffe" wie beispielsweise Papier und Vliese auf Basis pflanzlicher, tierischer, mineralischer, oder auch künstlicher Fasern oder Pappen in Frage. Beispiele sind Faserwerkstoffe aus pflanzlichen Fasern und neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Diese Materialien können im Verfahrensschritt a) beispielsweise durch einen Schneckenextruder bereitgestellt werden, in welchem mittels Druck-, Temperatur- und Scherkräften das polymere Material oder die Dryblends aufgeschmolzen, gegebenenfalls homogenisiert und an den Verfahrensschritt b) weitergeleitet werden.

Im Verfahrensschritt b) erfolgt das Extrudieren der geschmolzenen Polymermasse durch eine Düse. Die geschmolzene und plastifizierte Polymermasse wird mittels Druck durch eine Düse gepresst, wobei zweckmäßigerweise durch die Wahl der Düsengeometrie schon ein Teil der endgültigen Produktgeometrie vorgegeben wird. Für Paneele hat sich insbesondere die Wahl einer Schlitz- oder einer Breitschlitzdüse als geeignet herausgestellt, welche ein Verhältnis von Schlitzbreite zu -Höhe von mehr als ca. 4:1 (Breite:Höhe), bevorzugt mehr als 10:1, des Weiteren bevorzugt von mehr als 20:1 aufweist. Insbesondere für die erfindungsgemäßen Paneele lassen sich durch diese eher breite und schmale Düsengeometrie schon ein Großteil der Trägerstruktur vorformen, welches den nachfolgenden Aufwand für die Kalibrierung der extrudierten polymeren Masse klein halten kann. Insbesondere kann es vorteilhaft sein, dass die Breitschlitzdüse Mittel zur Einstellung des Düsenspaltes aufweist. Diese Mittel können beispielsweise dazu genutzt werden, die Randbereiche des extrudierten flachen Stranges extrem abzuflachen, sodass in diesen Randbereichen ohne großen Kalibrierungsaufwand in einem weiteren Verfahrensschritt im Vergleich zu mittleren Paneeldicken flachere Verbindungsstellen zwischen unterschiedlichen Paneelen ausgebildet werden können.

Im Verfahrensschritt c) erfolgt das Kalibrieren der geschmolzenen Polymermasse unter Ausbildung eines plattenförmigen Trägers mittels einer Anordnung aus mehreren rotierbaren Walzen, wobei die einzelnen Walzen über- oder hintereinander angeordnet sind und jede einzelne Walze mit benachbarten Walzen mindestens einen Kalibrierspalt ausbildet durch welchen die geschmolzene Polymermasse geführt wird, wobei die Kalibrierspalt-Höhen über eine horizontale oder vertikale Bewegung einzelner Walzen während des Herstellungsprozesses variabel einstellbar sind. Im Gegensatz zum Stand der Technik erfolgt die Formung und die Kalibrierung der Paneele nicht durch die Verwendung einer flächigen Presse, sondern durch den Einsatz von Walzen. Durch die durch die Walzenanordnung gebildeten Spalträume zwischen den Walzen wird die geschmolzene polymere Masse geführt und aufgrund der mechanischen Belastung in den Walzenspalten wird die Masse gequetscht und auf die gewünschte Dicke gebracht. Neben den auftretenden mechanischen Kräften durch die Walzen kann die polymere Masse gleichzeitig auch gekühlt werden. Dies kann über die Walzen oder mittels anderer Kühlmittel, z.B. durch Anblasen mit Luft, erfolgen. Das sich mittels der Walzenanordnung und mittels der Walzenspalte eine effiziente Kalibrierung erhalten lässt ist überraschend, da die viskoelastischen Eigenschaften der geschmolzenen polymeren Masse eher den Einsatz von Pressen mit großer Oberfläche nahelegen. Die im Vergleich zu den Pressen eher kleine aktive Kalibrieroberfläche in den Walzenspalten sollte eher dazu führen, dass aufgrund der rheologischen Eigenschaften der Polymermasse, wie beispielsweise thixotropen Eigenschaften, sich an kleinen Kalibrieroberflächen nur eine ungenügende Kalibrierung ergibt. Dies ist überraschenderweise aber nicht der Fall, sodass über die Anordnung mehrerer Walzen eine effiziente und zeitsparende Produktion gewährleistet werden kann. Mehrere Walzen in diesem Zusammenhang bedeuten mehr als vier, also beispielsweise fünf Walzen, wobei die mehreren Walzen mindestens 3 oder 4 separate Spalte ausbilden. Bevorzugt sind die Spalte hintereinander, durch die Walzen getrennt, angeordnet. Insbesondere ist es erfindungsgemäß auch vorgesehen, dass die Kalibrierung des Trägers nur über das Führen des geschmolzenen Trägermaterials durch die Walzenspalte erfolgt. Insofern kann es erfindungsgemäß auch vorgesehen sein, dass das Verfahren auf den Einsatz plattenförmiger Presseinrichtungen, wie beispielsweise Bandpressen, gänzlich verzichten kann. Auch kann vorgesehen sein, dass die Kalibrierung der Träger nur durch die hintereinander angeordneten Walzen direkt aufeinanderfolgend an einem Ort der Vorrichtung erfolgt. Eine Aufteilung der Walzenanordnung, beispielsweise erst zwei Walzenspalte, gefolgt von beispielsweise einer Kühlstrecke und dann wieder ein oder zwei Walzenspalte, wäre in diesem Fall nicht erfindungsgemäß. Erfindungsgemäß kann weiter vorgesehen sein, dass die Kalibrierung direkt nach der Extrusion des Trägermaterials erfolgt und weitere signifikante Kalibrations- oder Glättungsschritte entfallen.

Die Kalibrierspalt-Höhen sind über eine horizontale oder vertikale Bewegung einzelner Walzen während des Herstellungsprozesses variabel einstellbar. Dies bedeutet, dass sich über eine Änderung der Position einer einzelnen Walze, sich auch die Spaltdimensionen desjenigen oder derjenigen Spalte ändern, welche zu benachbarten Walzen ausgebildet werden. So lassen sich die Spaltdimensionen und damit die Trägerhöhe über den Abstand der Walzen zueinander beeinflussen. Auch kann über die relative Höhe der einzelnen Walzen zueinander der Abzugs- oder Auftreffwinkel des geschmolzenen Polymermaterials auf die Walze geändert werden, welches unterschiedliche mechanische Kräfte, ggf. unterschiedliche Kühleigenschaften und - Flächen, sowie mögliche Lufteinschlüsse zwischen der Walze und dem Polymer nach sich zieht. Eine Walze ist während des Herstellungsprozesses variabel einstellbar, wenn die Walze während des Durchlaufens des polymeren Materials ihre X- und/oder Y-Position verändern kann. Die einzelnen Spalte können im Rahmen der Herstellung entweder isobar oder isochor gesteuert werden. Erstere Fahrweise gibt eine mechanische Kraft auf das polymere Trägermaterial im Walzenspalt vor, wohingegen letztere Fahrweise auf eine konstante Dicke des Spaltes zwischen zwei Walzen abstellt. In ersterer Fahrweise werden also die Walzenpositionen dynamisch angepasst, wohingegen bei letzterer die Walzenpositionen eher konstant zueinander gehalten werden.

Besonders vorteilhaft ist, wenn zwischen mehreren oder sämtlichen Walzen unterschiedliche Kalibrierspalte eingestellt werden können. Damit kann den während der Produktion auftretenden Schwankungen in der Trägerstärke und eventuell einer nicht ganz homogenen Kühlleistung der einzelnen Walzen entgegengewirkt werden. Jede der Walzen kann einfach nur "mitlaufen" oder die Förderung der Folie unterstützen, weshalb auch vorgesehen sein kann, dass die Walzen einzeln oder zusammen antreibbar sind. Je nach Walzenpositionierung kann das Trägermaterial die Walzen quasi in einer Wellenlinie durchlaufen und kommt somit einmal mit der einen und einmal mit der anderen Seite aufeinanderfolgender Walzen in Kontakt. Damit der Einfluss der Berührungsflächen zwischen Walze und Trägeroberfläche für beide Trägerseiten weitgehend gleich ist, kann vorgesehen sein, dass der Durchmesser der Hauptwalzen und der nachgeschalteten Walzen so gewählt ist, dass die Berührungsflächen zwischen Träger und Walzen auf beiden Seiten des Trägers weitgehend gleich sind. Beim Umschlingen einer jeweiligen Walze kann immer nur eine Extrudatseite gekühlt werden, wodurch ggf. Spannungen in der Platte auftreten können. Um diesen ungleichmäßigen Kühlprofil entgegenzuwirken, kann beispielsweise rückseitig aktiv über den Eintrag kalter Luft (z.B. Airknife) eine gleichmäßigere Kühlwirkung auf den Träger eingestellt werden.

Da das Abkühlverhalten über die Breite des Extrudats unterschiedlich sein kann und um auch einem Neck-In Effekt entgegenzuwirken ist es weiter möglich auf der Gegenseite mit Wärme im Randbereich zu arbeiten. Hierzu können sich beispielsweise IR-Strahler anbieten. Weitere Maßnahmen zum gleichmäßigen Abkühlen der geformten Polymermasse können Vakuumboxen sein, die für ein luftfreies Anlegen der Polymerschmelze auf der Walze sorgen oder auch ein sogenanntes Edge-Pinning, wobei der Randbereich elektrostatisch auf der Walze fixiert wird.

Im Verfahrensschritt d) erfolgt ein Aufbringen eines eine Dekorvorlage nachbildenden Dekors auf zumindest einen Teilbereich des zumindest teilweise kalibrierten Trägers. Das Aufbringen der Dekorvorlage kann also nach Durchlauf durch die Walzenanordnung am fertig kalibrierten Träger oder aber auch vor Durchlauf des letzten Walzen-Kalibrierspaltes erfolgen. Der Träger weist über das erfindungsgemäße Verfahren nicht nur eine besonders glatte Oberfläche mit einer geringen Rauigkeit, sondern auch eine Oberfläche mit besonders wenigen Lufteinschlüssen auf. Diese beiden Faktoren können zu einem besonders reproduzierbaren und qualitativ hochwertigen dekorierten Trägerendprodukt beitragen. Ohne durch die Theorie gebunden zu sein kann, bedingt durch das relativ geringe Volumen im Walzenspalt zwischen den Walzenpaaren, im Vergleich zu einer flächigen Presse die Luft im Träger deutlich besser entweichen. Dies kann zu besonders lufteinschlussarmen Trägern und Trägeroberflächen führen. Mittels einer zweiten, eingebrachten weiß eingefärbten Polymerschmelze auf der Oberseite des geschmolzenen und extrudierten Polymers, kann ein glatter, lunkerfreier Druckgrund appliziert werden, der entgegen den Lösungen aus dem Stand der Technik nicht durch polymerfremde Duroplasten auflackiert werden muss. Hier ergibt sich der Vorteil, dass dieser aus einer nahezu identischen thermoplastischen Polymermatrix der Trägerplatte besteht. Letzteres kann für ein effizientes Recycling sehr vorteilhaft sein.

Weiterhin erfolgt ein Aufbringen eines eine Dekorvorlage nachbildenden Dekors auf zumindest einen Teilbereich des Trägers. Dabei kann das Dekor beispielsweise durch einen sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet- oder Laserdruck-Verfahren eingesetzt werden.

Beispielsweise kann, um eine Dekorvorlage auf besonders detailgetreue und hochgenaue Weise in dreidimensionaler Form zu imitieren beziehungsweise nach zu empfinden, das Dekor nach Durchlaufen der Walzenanordnung vorlagenidentisch aufgebracht werden. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Dabei können eine Mehrzahl an Dekorschichten mit zumindest teilweise unterschiedlichem Flächenauftrag auf Basis bereitgestellter dreidimensionaler Dekordaten sukzessive aufgebracht wird.

Ferner können die Dekorschichten aus einer insbesondere strahlungshärtbaren Farbe und/oder Tinte ausgebildet werden. Beispielsweise kann eine UV-härtbare Farbe oder Tinte verwendet werden. In dieser Ausgestaltung kann eine besonders detailgetreue und übereinstimmende Nachbildung der Dekorvorlage erreichbar sein. Zum einen kann auf diese Weise ohne das Vorsehen weiterer Maßnahmen hochgenau eine Synchronpore erzielbar sein. Eine Synchronpore kann dabei insbesondere eine Pore oder eine andersartige Struktur sein, welche räumlich exakt dort angeordnet ist, wo sie optisch dargestellt ist durch ein mit dem optischen Dekormerkmalen übereinstimmenden haptischen Strukturierung. Dies ist im Wesentlichen in dieser Ausgestaltung automatisch der Fall, da die strukturelle Ausgestaltung eben durch die Farbe beziehungsweise Tinte erzeugt wird. Darüber hinaus weisen Dekorvorlagen, wie beispielsweise Holzwerkstoffe, oftmals eine Variation des Farbeindrucks nicht nur entlang ihrer Breite beziehungsweise Länge sondern ebenfalls entlang ihrer Tiefe auf. Auch dieser Farbeindruck beziehungsweise Farbverlauf kann insbesondere in dieser Ausgestaltung besonders detailgetreu nachempfunden werden, was auch den Gesamteindruck des Paneels noch identischer erscheinen lässt. Dabei lässt sich insbesondere dann, wenn die verwendete Farbe beziehungsweise Tinte strahlungshärtbar ist, eine besonders schnelle Verfestigung erreichen, wodurch die Mehrzahl an Schichten schnell aufeinander aufbringbar sein können, was auch den Gesamtprozess in einer geringeren Zeit realisierbar und damit besonders kostengünstig gestalten kann.

Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Dabei können die Dekorschichten jeweils in Dicken von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv- beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Im Verfahrensschritt e) erfolgt ein Aufbringen einer Schutzschicht auf zumindest einen Teilbereich des Dekors. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Beispielsweise kann es vorgesehen sein, dass die Verschleiß- und/oder Deckschicht als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Weiterhin kann die Deckschicht zunächst teilgehärtet werden und im Anschluss eine Endlackierung mit einem Urethanacrylat und eine Endhärtung, etwa mit einem Galliumstrahler, durchgeführt werden.

Ferner kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B.

Cholinchlorid aufweist. Das Antistatikmittel kann dabei beispielsweise in einer Konzentration zwischen ≥ 0,1 Gew.-% und ≤ 40,0 Gew.-%, bevorzugt zwischen ≥ 1,0 Gew.-% und ≤ 30,0 Gew.-% in der Deck- und/oder Zusammensetzung zur Ausbildung der Verschleißschicht enthalten sein.

Ebenso kann sich eine transparente Verschleißschicht aus thermoplastischen Polymeren anbieten, die als Folienbahn auf die Dekorschicht kaschiert wird. Gegebenenfalls ist für eine ausreichende Adhäsion der Einsatz eines Haftvermittlers/Primers notwendig, der sich mit der Dekorschicht durch Strahlenhärtung von oben vernetzt ("Klebelack") oder thermisch siegelt ("Hotmelt"). Eine thermoplastische Verschleißschicht bietet weiter Vorteile für den Recyclingprozess des Gesamtaufbaus. Eine Oberflächenstrukturierung kann sehr einfach über beheizte strukturierte Bleche über eine Presse bzw. strukturierte Walzen über einen Kalander eingebracht werden (diese auch synchron zum Dekor).

Des Weiteren kann vorgesehen sein, dass in die Schutz- beziehungsweise Verschleiß- oder Deckschicht eine Strukturierung, insbesondere eine mit dem Dekor übereinstimmende Oberflächenstrukturierung durch das Einbringen von Poren eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Weiterhin kann es vorgesehen sein, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht sattfindet. In die so teilgehärtete Schicht wird mittels geeigneter Werkzeuge, wie beispielsweise einer Hartmetall-Strukturwalze oder eines Stempels während oder nach dem Kalibrierschritt, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

In einer bevorzugten Ausführungsform des Verfahrens kann das Kalibrieren in Verfahrensschritt c) unter Verwendung mindestens eines Hauptwalzenpaares aus zwei Walzen mit größerem Durchmesser und mindestens dreier hintereinander angeordneter Kalibrierwalzen mit im Vergleich zum Hauptwalzenpaar kleineren Durchmesser erfolgen. Zum Erhalt einer möglichst gleichmäßigen Oberflächenstruktur zur Aufnahme des Dekors hat es sich als besonders vorteilhaft herausgestellt, dass über unterschiedliche Walzengrößen das Aufbringen mechanischer und ggf. auch thermischer Kräfte auf den Träger ungleichmäßig ausgestaltet wird. Diese Maßnahme kann zu besonders glatten Trägeroberflächen führen, welche sich besonders einfach und reproduzierbar mit Dekoren versehen lassen. Der Hauptanteil der gewünschten und notwendigen Verformung kann dabei über das größere Walzenpaar erfolgen, wohingegen die weiteren, kleineren Kalibrierwalzen nur noch geringe Kräfte zum Erhalt eines gleichmäßig kalibrierten Produktes ausüben und Luft gesteuert aus dem Träger transportieren. Dadurch lassen sich unter Beibehalt nur geringer Dickenschwankungen des produzierten Trägers hohe Liniengeschwindigkeiten erreichen. Die Walzendurchmesser unterschieden sich im Durchmesser, wenn die entsprechenden Durchmesser von Haupt- und Kalibrierwalzen sich um mindestens 10% unterscheiden. Durch oben genannte Anordnung ergeben sich beispielsweise folgende Spaltanordnungen für das geschmolzene Polymermaterial. Zwingend durchläuft das geschmolzenen Polymermaterial den Spalt zwischen den Hautwalzen, und mindestens die beiden Spalte zwischen den mindestens drei Kalibierwalzen. Die Anordnung kann beispielsweise insgesamt 8, bevorzugt 6, des Weiteren bevorzugt 4 Kalibrierwalzen aufweisen. Diese Anzahl an einzelnen Spalten hat sich zum Erhalt dekorierter Paneele mit verbesserten Oberflächen- und Dekoreigenschaften als besonders geeignet herausgestellt.

Innerhalb einer weiteren Ausgestaltung des Verfahrens kann die Höhe des Kalibrierspalts des Hauptwalzenpaares H_{H} sich um größer oder gleich 10% und kleiner oder gleich 50 % von den Höhen der Kalibrierspalte der Kalibrierwalzen H_{K} unterscheiden. Zum Erhalt besonders glatter Trägeroberflächen und zum Erhalt mechanisch besonders spannungsarmer Trägermaterialien hat sich oben genanntes Spalthöhenverhältnis zwischen Haupt- und Kalibrierwalzen als besonders geeignet herausgestellt. Durch diese Festlegung kann die auf den Träger einwirkende Kraft mitbestimmt werden, sodass für die Walzenanordnung eine zur Herstellung dekorierter Paneele besonders geeignete Kraftverteilung vorgegeben ist. Es ergeben sich dadurch besonders günstige Eigenschaften sowohl in Bezug auf das Vorliegen von Lufteinschlüssen als auch in Bezug auf das Auftreten von Spannungsrissen im Trägermaterial. Zudem scheint auch der Abstand der mechanischen Krafteinwirkung zur Formung des Trägers, in Relation zum Ort des Auftragens des Dekors eine wichtige Rolle zu spielen. Es hat sich dabei in einer bevorzugten Ausführungsform als besonders geeignet herausgestellt, dass die Höhe des oder der Kalibrierspalte um größer oder gleich 10% und kleiner oder gleich 50 % kleiner sind als die Höhe des Hauptwalzenspaltes. Dies kann zu hohen Liniengeschwindigkeiten ohne Verlust der Oberflächenqualität des dekorierten Paneels beitragen.

In einem weiteren Aspekt des Verfahrens kann die Höhe des letzten und/oder des vorletzten Kalibrierspaltes so gewählt werden, dass der Träger um einen Faktor von kleiner oder gleich 10% und größer oder gleich 3% in seiner Höhe komprimiert wird. Zum Erhalt besonders lufteinschlussarmer und besonders glatter Trägeroberflächen hat sich oben angegebenes Kompressionsverhältnis als besonders vorteilhaft herausgestellt. Das Verhältnis lässt sich beispielsweise über eine Dickenmessung des Trägers vor und nach dem Spaltdurchlauf bestimmen. Die gewünschte Kompressionsrate lässt sich dabei über das Höhenprofilverhältnis der Kalibrierwalzenspalte oder aber auch über die aufzubringende Kraft in den einzelnen Walzenspalten einstellen.

In einer weiteren, bevorzugten Charakteristik des Verfahrens kann der Verfahrensschritt d) vor dem Aufbringen des Dekors zusätzlich noch das Aufbringen eines Dekoruntergrund auf zumindest einen Teilbereich des Trägers umfassen. Gleichzeitig oder kurz vor dem Aufbringen der Dekorschicht oder aber auch schon in der Walzenanordnung können natürlich auch weitere optionale Schichten, wie beispielsweise ein Dekoruntergrund oder eine Primerschicht auf den Träger aufgebracht werden. Dabei kann es beispielsweise vorteilhaft sein, diese weiteren Schichten vor der letzten Walze auf den Träger aufzubringen, da eine verbesserte Haftung dieser weiteren Schicht(en) auf den Träger durch die mindestens einmalige mechanische Behandlung im weiteren Kalibrierspalt erreicht werden kann. Des Weiteren kann der Träger zwischen oder nach der Walzenanordnung ein Vorbehandeln des Trägers durch eine elektrostatische Entladung erfahren. Diese kann insbesondere dazu dienen, das Auftreten von Unschärfen im Laufe der Dekoraufbringung zu vermeiden. Dies ist insbesondere für Druckverfahren zum Aufbringen der Dekorschichten geeignet, da die sich im Laufe des Produktionsprozesses aufbauende elektrostatische Ladung in den zu bedruckenden Trägern zu einer Ablenkung der Farb- bzw. Tintentropfen auf ihrem Weg vom Druckkopf zur der zu bedruckenden Oberfläche führt. Die so hervorgerufene Ungenauigkeit des Farbauftrags führt zu der wahrnehmbaren Unschärfe des Druckbildes.

Eine mögliche Einrichtung zur Ableitung elektrostatischer Ladungen kann wenigstens eine der Walzen oder eine separate Rolle, Bürste oder Lippe aus einem leitfähigen Material mit einer Leitfähigkeit ≥ 1^{∗}10³ Sm⁻¹ aufweisen, welche den Träger zumindest im Bereich des Druckwerks elektrisch leitend kontaktiert und welche mit einem elektrischen Massenpotential verbunden ist. Dabei kann das elektrische Massenpotential beispielsweise durch eine Erdung bereitgestellt werden. Ferner kann eine Einrichtung zur Ableitung elektrostatischer Ladungen beispielsweise eine Einrichtung zur Erzeugung einer Corona-Entladung sein.

Ein Dekoruntergrund kann beispielsweise zunächst einen Primer, insbesondere für Druckverfahren, etwa in einer Dicke von ≥ 10 µm bis ≤ 60 µm, umfassen. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden. Beispielsweise kann das Urethanacrylat in Form von reaktiven Oligomeren bzw. Prepolymeren in der Primer-Zusammensetzung enthalten sein. Unter dem Begriff "reaktives Oligomer" bzw. "Prepolymer" ist dabei im Sinne der Erfindung eine Urethanacrylat-Einheiten aufweisende Verbindung zu verstehen, welche strahlungsinduziert, ggf. unter Zusatz eines reaktiven Bindemittels oder eines Reaktivverdünners zum Urethan- oder Urethanacrylat-Polymer reagieren kann. Urethanacrylate im Sinne der Erfindung sind dabei Verbindungen, welche im Wesentlichen aus einem oder mehreren aliphatischen Strukturelementen und Urethangruppen aufgebaut sind. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylen- als auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls überquartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Ferner können Urethanacrylate im Sinne der Erfindung auch ethylenisch ungesättigte Strukturelemente aufweisen. Hierbei handelt es sich vorzugsweise um Vinyl- oder Allylgruppen, die auch mit C₁-C₄-Alkyl, insbesondere Methyl substituiert sein können und welche sich insbesondere von α,β-ethylenisch ungesättigten Carbonsäuren bzw. deren Amiden ableiten. Besonders bevorzugte ethylenisch ungesättigte Struktureinheiten sind Acryloyl- und Methacryloylgruppen wie Acrylamido und Methacrylamido und insbesondere Acryloxy und Methacryloxy. Strahlungshärtbar im Sinne der Erfindung bedeutet, dass die Primerzusammensetzung induziert durch elektromagnetische Strahlung geeigneter Wellenlänge, wie beispielsweise UV- oder Elektronenstrahlung zumindest teilpolymerisiert werden kann.

Die Verwendung strahlungshärtbarer Primer auf Basis von Urethanacrylaten ermöglicht in besonders vorteilhafter Weise eine sich umgehend an den Auftrag und die strahlungsinduzierte Härtung der Primerschicht anschließende Aufbringung eines Dekors, beispielsweise mittels Digitaldrucktechnik. Dabei sorgt die Primerschicht für eine gute Haftung des aufgebrachten Dekors auf der mit dem Primer beschichteten Trägeroberfläche. Dabei besitzen Urethanacrylate den Vorteil einer guten Haftung sowohl gegenüber dem Trägermaterial, als auch gegenüber der Dekorschicht, also der Dekorfarbe oder -tinte. Dies ist unter anderem durch die bei dieser Art der Polymere auftretenden Polymerisationsreaktionen zu begründen, bei welcher zum einen eine strahlungsinduzierte radikalische Polymerisation der OH-Gruppen auftritt, zum anderen eine Nachhärtung des Polymers über die NCO-Gruppen. Dies führt dazu, dass nach der strahlungsinduzierten Härtung umgehend eine klebfreie und weiterbearbeitbare Oberfläche erhalten wird, während die endgültigen Eigenschaften der Primerschicht auch durch die NCO-Gruppen basierte Nachhärtung beeinflusst werden und für eine sichere Bindung zum Trägermaterial sorgen. Darüber hinaus stellt die auftretende Nachhärtung sicher, dass eine hinreichende Schichtstabilität auch in weniger oder nicht belichteten Bereichen des Trägers erreicht wird. Hierdurch lassen sich mit dem erfindungsgemäßen Verfahren insbesondere auch vorstrukturierte Träger, also Träger, deren Oberfläche bereits eine dreidimensionale Strukturierung aufweisen, sicher mit Primerschicht versehen, wodurch sichergestellt ist, dass das anschließend aufgebrachte Dekor haftfest mit dem Träger verbunden ist.

Der Primer kann im erfindungsgemäßen Verfahren bevorzugt mittels Gummiwalzen, Gießmaschine oder durch Aufsprühen auf die durch die Walzenanordnung laufende Trägerplatte aufgebracht werden. Es ist auch möglich, dass der Primer nach der Walzenanordnung aber vor der Aufbringung des Dekors aufgebracht wird. Bevorzugt wird der Primer in einer Menge zwischen ≥1 g/m² und ≤100 g/m², vorzugsweise zwischen ≥10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Neben der Verwendung eines Primers ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Druckuntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren, geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥ 5 g/m² und ≤ 40 g/m², vorzugsweise ≥ 10 g/m² und ≤ 30 g/m² aufgetragen werden. Ferner kann ein Papier oder Vlies mit einer Grammatur zwischen ≥ 30 g/m² und ≤ 80 g/m², vorzugsweise zwischen ≥ 40 g/m² und ≤ 70 g/m² auf den plattenförmigen Träger aufgebracht werden.

Im Rahmen einer bevorzugten Ausführungsform des Verfahrens kann zumindest das Aufbringen des Dekoruntergrundes auf einen Teilbereich des Trägers im Verfahrens schritt d) vor der letzten Walze der Walzenanordnung des Verfahrensschritts c) erfolgen. Zur Ausbildung einer besonders innigen Haftung zwischen Dekoruntergrund und Träger hat es sich als besonders geeignet herausgestellt, dass die Kalibrierwalzen nicht nur zur Einstellung der Trägerhöhe, sondern auch zur Aufbringung und mechanischen Fixierung des Dekoruntergrundes verwendet werden. Durch die Maßnahme lässt sich ein besonders effizientes Verfahren realisieren, wobei insbesondere auch die Trocknung des Dekoruntergrundes beschleunigt werden kann, da an dieser Stelle im Prozess der Träger höhere Temperaturen aufweist. Somit können weitere mechanische Komponenten eingespart und die Temperaturführung bei der Abkühlung optimiert werden. Eine insgesamt vom Material abzuführende Wärmemenge kann beispielsweise durch die Wärmekapazität des Dekoruntergrundes reduziert werden.

In einer weiteren, bevorzugten Ausgestaltung des Verfahrens kann die Walzenanordnung neben dem Hauptwalzenpaar noch mindestens vier weitere Kalibrierwalzen aufweisen, wobei einer der Walzenspalte der Kalibrierwalzen isobar gefahren wird. Entgegen der Fahrweise mit konstanten Spaltdicken zwischen den Kalibrierwalzen, hat es sich für die Oberflächeneigenschaften der Träger als besonders vorteilhaft herausgestellt, dass mindestens einer der Spalte isobar, also mit konstanter Krafteinwirkung auf den Träger, gefahren wird. Dadurch lassen sich sehr schnelle Prozesszeiten unter Beibehalt einer möglichst glatten Trägeroberfläche verwirklichen. Isobare Fahrweise im Sinne der Erfindung meint dabei, dass über die Steuerung der Walzenabstände die Krafteinwirkung auf den Träger im Walzenspalt während der Herstellung des Trägers um kleiner als 10%, bevorzugt kleiner als 5%, des Weiteren bevorzugt um kleiner als 2,5 % schwankt. Die Kräfte zur Herstellung eines Trägers können beispielsweise über einen Kraftsensor an oder in der Walze oder aber mittels eines oder mehrerer Kraftsensoren im Trägermaterial gemessen werden.

Innerhalb eines bevorzugten Aspekts des Verfahrens können die Haupt- und die Kalibrierwalzen temperierbar ausgerüstet sein und die temperierbare Oberfläche der Kalibrierim Vergleich zu den Hauptwalzen um einen Faktor von größer oder gleich 1,1 bis zu kleiner oder gleich 2,5 größer sein. Neben der mechanischen Behandlung der geschmolzenen Polymermasse kann mittels der Walzenanordnung gleichzeitig auch eine thermische Behandlung des Trägers stattfinden. Die thermische Behandlung kann prinzipiell in einem partiellen Erhitzen oder einer partiellen Kühlung des Trägers bestehen. Vorteilhafterweise wird das geschmolzene Material durch die Walzen an der Walzenoberfläche gekühlt. Dies kann beispielsweise dadurch erreicht werden, dass die einzelnen Walzen im Walzeninneren über eine Zufuhr von Wärmeträgern, wie beispielsweise eine Kühlflüssigkeit, verfügen. Des Weiteren ist es vorteilhaft, dass die einzelnen Walzen der Walzenanordnung separat in Ihren Oberflächentemperaturen geregelt werden können. Dies kann zu einem besonders reproduzierbaren und schonenden Formungs- und Abkühlungsprozess beitragen. Das oben angegebene Verhältnis der Kühlflächen zwischen Haupt- und Kalibrierwalzen hat sich als besonders geeignet herausgestellt, um besonders mechanisch spannungsarme dekorierte Paneele mit besonders wenigen Lufteinschlüssen zu erhalten. Ohne durch die Theorie gebunden zu sein ergeben sich die qualitativ hochwertigeren Dekore über die in den einzelnen Schritten gesteuert abgeführte Wärmemenge, welche auch proportional zur Oberfläche der Walzenpaare ist. Innerhalb dieses Bereiches lassen sich zudem sehr hohe Bahngeschwindigkeiten und ein besonders effizientes Austreiben von Lufteinschlüssen aus den Trägern realisieren. Des Weiteren können die einzelnen Walzentemperaturen, und demzufolge auch die an diesen erreichbaren Abkühlraten, als Funktion der auf den Träger ausgeübten mechanischen Kraft gewählt werden. Größere Krafteinwirkungen, beispielsweise durch hohe Kompressionen des Trägermaterials, können durch einen höheren Temperaturgradienten zwischen Walze und Trägermaterial begleitet werden, sodass in Summe ein mechanisch spannungsärmerer Träger erhalten wird.

Des Weiteren erfindungsgemäß ist eine Vorrichtung zur Herstellung eines dekorierten Wand- oder Bodenpaneels, wobei die Vorrichtung Mittel zum Durchführen des erfindungsgemäßen Verfahrens. Für die Vorteile der erfindungsgemäßen Vorrichtung wird explizit auf die Vorteile des erfindungsgemäßen Verfahrens Bezug genommen. Eine bevorzugte Ausgestaltung für die Vorrichtung kann einen temperierbaren Schneckenextruder und eine in Ihrem Profil veränderliche Breitschlitzdüse umfassen. Des Weiteren kann die Vorrichtung über temperier- und insbesondere kühlbare Walzen verfügen. Die einzelnen Walzen lassen sich in ihren Positionen im Produktionsprozess relativ zueinander bewegen und demzufolge lassen sich auch die sich zwischen den Walzen ausbildenden Walzenspalte in ihren Dimensionen verändern. Bevorzugt kann zur Formung und Kalibrierung des Trägers mindestens ein größeres Hauptwalzenpaar und mehrere, bevorzugt mindestens 3, weiter bevorzugt 4, des Weiteren bevorzugt 5 weitere, kleinere Kalibrierwalzen eingesetzt werden. Die Walzen können jeweils separat in ihren Temperaturen einstellbar ausgerüstet sein. Nach der Walzenanordnung kann die erfindungsgemäße Vorrichtung des Weiteren Mittel zur Aufbringung weiterer Schichten, wie beispielsweise eines Dekoruntergrunds, eines Dekors und/oder einer Verschleißschutzschicht aufweisen. Die Mittel zur Aufbringung dieser Schichten können nach den Kalibrierwalzen angeordnet sein. Bevorzugt erfolgt das Aufbringen des Dekors nach der Walzenanordnung über ein Direktdruckverfahren. Das Aufbringen einer Dekor-Schutzschicht kann beispielsweise über ein Auflaminieren unter Druck oder Aufstreichen oder Rakeln einer flüssigen oder pastösen Schutzschichtmasse erfolgen. Die Vorrichtung kann zudem weitere Mittel zur endgültigen Kühlung des Trägers aufweisen. Es ist zudem auch möglich, dass die Vorrichtung auch weitere Mittel aufweist, um die vom Träger abgeführte Wärme wieder in den Produktkreislauf zurückzuführen. Dies kann beispielsweise über Wärmetauscher erfolgen. Die gewonnene Abwärme kann beispielsweise zur Temperierung des Extruders eingesetzt werden. Zusätzlich kann die Vorrichtung noch weitere Mittel zur mechanischen Bearbeitung des Trägers, beispielsweise zur speziellen Profilierung der Trägerkanten aufweisen.

Des Weiteren erfindungsgemäß ist ein Wand- oder Bodenpaneel, hergestellt nach dem erfindungsgemäßen Verfahren. Für die Vorteile der erfindungsgemäßen Wand- und Bodenpaneele wird explizit auf die Vorteile des erfindungsgemäßen Verfahrens und auf die Vorteile der erfindungsgemäßen Vorrichtung Bezug genommen. Insbesondere ist darauf hinzuweisen, dass mit sehr hohen Liniengeschwindigkeiten über das erfindungsgemäße Verfahren Paneele erhältlich sind, welche sich durch besonders glatte Oberflächen und einen geringen Luftanteil in und in Form von Poren an der Oberfläche der Paneele auszeichnen. Die Anzahl und Größe durch Luft bedingter Oberflächendefekte kann signifikant reduziert werden.

Es ergeben sich durch die Temperaturführung und die mechanische Behandlung zudem sehr spannungsarme Träger. Das Verfahren und die Vorrichtung sind zudem für die Verarbeitung unterschiedlichster Materialien geeignet.

In besonders vorteilhafter Weise kann das Trägermaterial Holz-Polymer-Werkstoffe (Wood Plastic Composite, WPC) aufweisen oder daraus bestehen. Hier kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Beispielsweise sind für ein WPC-Produkt mit einer 50/50 Verteilung der Holz- und Polymeranteile bei einer beispielhaften Produktstärke von 4,1 mm möglich, was einen besonders effektiven Herstellungsprozess ermöglichen kann.

In einer bevorzugten Ausführungsform des Wand- oder Bodenpaneel kann das Paneel zu größer oder gleich 50 Gew.-% und kleiner oder gleich 100 Gew.-% einen WPC-Werkstoff oder einen PVC-Werkstoff aufweisen. Weiterhin kann es besonders vorteilhaft sein, dass das Trägermaterial ein PVC-basiertes Material umfasst oder daraus besteht. Auch derartige Materialien können in besonders vorteilhafter Weise für hochwertige Paneele dienen, welche etwa auch in Feuchträumen problemlos verwendbar sind. Ferner bieten sich auch PVC-basierte Trägermaterialien für einen besonders effektiven Herstellungsprozess an, da hier etwa Liniengeschwindigkeiten von 8m/min bei einer beispielhaften Produktstärke von 4,1mm möglich sein können, was einen besonders effektiven Herstellungsprozess ermöglichen kann. Ferner weisen auch derartige Träger eine vorteilhafte Elastizität und Wasserverträglichkeit auf, was zu den vorgenannten Vorteilen führen kann.

Bei Kunststoff-basierten Paneelen wie auch bei WPC-basierten Paneelen können dabei mineralische Füllstoffe von Vorteil sein. Besonders geeignet sind hier etwa Talk oder auch Kalziumcarbonat (Kreide), Aluminiumoxid, Kieselgel, Quarzmehl, Holzmehl, Gips. Beispielsweise kann Kreide vorgesehen sein in einem Bereich von ≥ 30 Gew.-% bis ≤ 70 Gew.-%, wobei durch die Füllstoffe, insbesondere durch die Kreide insbesondere der Schlupf des Trägers verbessert werden kann. Auch können sie in bekannter Weise eingefärbt sein. Insbesondere kann es vorgesehen sein, dass das Plattenmaterial ein Flammschutzmittel aufweist.

In einer bevorzugten Ausführungsform des Wand- oder Bodenpaneels kann das Trägermaterial des Paneels ein Matrixmaterial und ein Feststoffmaterial aufweisen, wobei das Matrixmaterial in einer Menge, bezogen auf das Trägermaterial, von ≥ 25 Gew.-% bis ≤ 55 Gew.-%, insbesondere von ≥ 35 Gew.-% bis ≤ 45 Gew.-%, vorliegt und wobei das Feststoffmaterial in einer Menge, bezogen auf das Trägermaterial, von ≥ 45 Gew.-% bis ≤ 75 Gew.-%, insbesondere von ≥ 55 Gew.-% bis ≤ 65 Gew.-%, vorliegt, und wobei das Matrixmaterial und das Feststoffmaterial gemeinsam, bezogen auf das Trägermaterial, in einer Menge von ≥ 95 Gew.-%, insbesondere ≥ 99 Gew.-%, vorliegen, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, gebildet ist aus einer Feststoffzusammensetzung bestehend aus wenigstens einem ersten Schichtsilikatpulver und einem zweiten Schichtsilikatpulver, und das Matrixmaterial zu wenigstens 50 Gew.-%, insbesondere zu wenigstens 80 Gew.-%, insbesondere zu wenigstens 95 Gew.-%, bezogen auf das Matrixmaterial, gebildet ist durch eine Kunststoffzusammensetzung bestehend aus einem Homopolymer und wenigstens einem ersten Copolymer und einem zweiten Copolymer. Überraschenderweise hat sich gezeigt, dass über das erfindungsgemäße Verfahren auch schwer zu verarbeitende, insbesondere schwer in der Oberfläche glättbare, mit Silikaten gefüllte Zusammensetzungen aus mehreren Polymeren verarbeitet werden können. Die Oberflächen können mit hohen Liniengeschwindigkeiten über das erfindungsgemäße Verfahren bearbeitet werden und die bei hohen Geschwindigkeiten erhältliche Glättung ist vergleichbar oder besser zu den Verfahren aus dem Stand der Technik.

Im Detail weist das Trägermaterial ein Feststoffmaterial und ein Matrixmaterial auf. Es ist vorgesehen, dass das Matrixmaterial in einer Menge, bezogen auf das Trägermaterial, von ≥ 25 Gew.-% bis ≤ 55 Gew.-%, insbesondere von ≥ 35 Gew.-% bis ≤ 45 Gew.-%, vorliegt. Weiterhin ist es vorgesehen, dass das Feststoffmaterial in einer Menge, bezogen auf das Trägermaterial, von ≥ 45 Gew.-% bis ≤ 75 Gew.-%, insbesondere von ≥ 55 Gew.-% bis ≤ 65 Gew.-%, vorliegt.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials größer oder gleich dem Anteil des Matrixmaterials ist.

Es ist weiterhin vorgesehen, dass das Matrixmaterial und das Feststoffmaterial gemeinsam, bezogen auf das Trägermaterial, in einer Menge von ≥ 95 Gew.-%, insbesondere ≥ 99 Gew.-%, vorliegen.

In anderen Worten kann es vorgesehen sein, dass neben dem Feststoffmaterial und dem Matrixmaterial in dem Trägermaterial weitere Substanzen lediglich in einem Anteil, bezogen auf das Trägermaterial, von < 5 Gew.-%, vorzugsweise von < 1 Gew.-% vorliegen. Somit kann es vorteilhaft sein, dass das Trägermaterial zu einem Großteil aus dem Feststoffmaterial und dem Matrixmaterial besteht. Besonders bevorzugt kann es vorgesehen sein, dass das Matrixmaterial und das Feststoffmaterial gemeinsam, bezogen auf das Trägermaterial, in einer Menge von 100 Gew.-%, vorliegen, das Trägermaterial somit aus dem Matrixmaterial und dem Feststoffmaterial besteht.

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostengünstig möglich ist.

Im Detail ist weiterhin vorgesehen, dass das Feststoffmaterial zu wenigstens 50 Gew.-%, insbesondere zu wenigstens 80 Gew.-%, insbesondere zu wenigstens 95 Gew.-%, bezogen auf das Feststoffmaterial, gebildet ist aus einer Feststoffzusammensetzung bestehend aus wenigstens einem ersten Schichtsilikatpulver und einem zweiten Schichtsilikatpulver.

Unter Schichtsilikatpulver wird dabei in an sich bekannter Weise ein Pulver aus einem Schichtsilikat verstanden. Als Schichtsilikat bezeichnet man bekannter Weise Minerale aus der Gruppe der Silikate, deren Silikatanionen üblicherweise in Schichten angeordnet sind. Beispielsweise werden unter Schichtsilikaten Minerale aus der Glimmergruppe, der Chloritgruppe, der Kaolinitgruppe und der Serpentingruppe verstanden.

Somit ist das Feststoffmaterial vorteilhafter Weise zumindest durch einen Großteil aus dem mineralischen Stoff Schichtsilikat gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Schichtsilikate bieten den Vorteil, dass sie die Herstellung eines Trägers mit guten mechanischen Eigenschaften erlauben können und sich gleichzeitig durch ihre Schichtstruktur gut zu entsprechenden Pulvern verarbeiten lassen können.

In einer Ausgestaltung der Erfindung kann das erste Schichtsilikatpulver oder das zweite Schichtsilikatpulver Talkum umfassen. Unter Talkum wird in an sich bekannter Weise ein Magnesiumsilikathydrat verstanden, welches beispielsweise die chemische Summenformel Mg₃[Si₄O₁₀(OH)₂] aufweisen kann. In einer weiteren Ausgestaltung der Erfindung kann das erste Schichtsilikatpulver und das zweite Schichtsilikatpulver Talkum umfassen. In einer weiteren bevorzugten Ausgestaltung kann das erste Schichtsilikatpulver und das zweite Schichtsilikatpulver zu wenigstens 80 Gew.-%, besonders bevorzugt zu wenigstens 95 Gew.-%, aus Talkum bestehen.

Insbesondere Talkum bieten den Vorteil, dass dies eine besonders schonende Herstellung des Trägers ermöglichen, da es problemlos in dem Matrixmaterial eingebettet werden kann und damit keinen abrasiven Effekt auf verwendete Presseinheiten ausübt.

Dabei kann insbesondere eine Mischung aus einem Homopolymer und einem ersten Copolymer und einem zweiten Copolymer für das Matrixmaterial besonders vorteilhafte Eigenschaften ermöglichen. Derartige Materialien bieten ferner den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Die effektive Prozessführung kann insbesondere dadurch erreicht werden, dass das Trägermaterial eine vorteilhafte Massenfließrate aufweist. Durch die Mischung aus einem Homopolymer und einem ersten Copolymer und einem zweiten Copolymer kann beispielsweise erreicht werden, dass das Trägermaterial eine Massenfließrate von ≥ 20 g/10 min bis ≤ 30 g/10 min, vorzugsweise von ≥ 24 g/10 min bis ≤ 26 g/10 min, aufweist. Dabei kann insbesondere die Verwendung von wenigstens zwei Copolymeren von Vorteil sein, da dadurch verbesserte elastische Eigenschaften des hergestellten Trägers erreicht werden können. Es kann insbesondere erreicht werden, dass mit dem Trägermaterial erzeugte Paneele einen vorteilhaften Biegemodul aufweisen. Es kann auf Basis des Trägermaterials beispielsweise ein Paneel bereitgestellt werden, welches einen Biegemodul von ≥ 3000 MPa bis ≤ 4000 MPa, vorzugsweise von ≥ 3400 MPa bis ≤ 3600 MPa, aufweist. Es kann außerdem erreicht werden, dass mit dem Trägermaterial erzeugte Paneele eine vorteilhafte Biegefestigkeit aufweisen. Es kann auf Basis des Trägermaterials beispielsweise ein Paneel bereitgestellt werden, welches eine Biegefestigkeit von ≥ 30 MPa bis ≤ 34 MPa, vorzugsweise von ≥ 31 MPa bis ≤ 33 MPa, aufweist. Ferner kann erreicht werden, dass mit dem Trägermaterial erzeugte Paneele eine vorteilhafte Biegedehnung aufweisen. Es kann auf Basis des Trägermaterials beispielsweise ein Paneel bereitgestellt werden, welches eine Biegedehnung von ≥ 2,0 % bis ≤ 2,8 %, vorzugsweise von ≥ 2,3 % bis ≤ 2,5 %, aufweist.

Es kann bevorzugt vorgesehen sein, dass das Homopolymer, das erste Copolymer und das zweite Copolymer Polypropylen umfassen. Polypropylen ist als Matrixmaterial besonders geeignet, da es zum einen kostengünstig erhältlich ist und ferner als thermoplastischer Kunststoff gute Eigenschaften als Matrixmaterial zum Einbetten des Feststoffmaterials aufweist.

In einer bevorzugten Ausführungsform des Wand- oder Bodenpaneels kann das Paneel ein multilaminares Kunststoffträgermaterial mit einer Mehrzahl N von Schichtfolgen A-B-A aufweisen, wobei Schicht A einen ersten thermoplastischen Kunststoff und Schicht B einen zweiten thermoplastischen Kunststoff aufweist und wobei der erste thermoplastische Kunststoff ein virginaler Kunststoff und der zweite Kunststoff ein rezyklierter Kunststoff ist, und wobei 250 ≥ N ≥ 2, vorzugsweise 200 ≥ N ≥ 3, vorzugsweise 125 ≥ N ≥ 4, noch bevorzugter 100 ≥ N ≥ 5. Es konnte in überraschender Weise gezeigt werden, dass ein derartiges Kunststoffträgermaterial über das erfindungsgemäße Verfahren mit hohen Liniengeschwindigkeiten und mit einer hohen Maßhaltigkeit hergestellt werden kann. Die unterschiedlichen Schichten können dabei als Co-Extrudat über mehrere Düsen gleichzeitig oder aber hintereinander abgelegt und über das erfindungsgemäße Verfahren prozessiert werden. Derartige Wand-, Decken- oder Bodenpaneele weisen eine verbesserten Feuchteresistenz auf, insbesondere mit einer reduzierten feuchte- oder hitzebedingten Quellung, sowie mit guten mechanischen Eigenschaften und einer verbesserten Bearbeitbarkeit.

Darüber hinaus ist das erfindungsgemäße Kunststoffträgermaterial ökologisch vorteilhaft, da es zu einem deutlichen Anteil aus rezyklierten Kunststoff gefertigt werden kann und somit ressourcenschonend ist. Ebenso eignen sich dazu A-B-C-B-A-Verbunde, beispielsweise als Variante Farbe, Füllstoff, Schaum, Inhouse-Recycling, oder auch Polymerverbunde.

Der rezyklierte thermoplastische Kunststoff der Schicht B kann beispielsweise ein amorphes Polyethylenterephthalat (PET) umfassen. Polyethylenterephthalat (PET) fällt in großen Mengen in der Verpackungsindustrie an, wo es insbesondere für Lebensmittelverpackungen und Getränkeflaschen Einsatz findet. Da im Bereich der Lebensmittelverpackung höchste Standards einzuhalten sind, ist ein Recycling von PET in der Regel nur begrenzt möglich. Auch trotz der inzwischen verfügbaren Recyclingverfahren wie z.B. das URRC-Verfahren (United Resource Recovery Corporation) werden große Mengen PET nicht ortsnah rezykliert, sondern zur Herstellung von Kunstfasern exportiert. Das erfindungsgemäße Verfahren bietet hier eine weitere Verwendungsmöglichkeit für rezykliertes PET.

Vorzugsweise kann der Anteil an rezykliertem Polyethylenterephthalat in der Schicht B in einem Bereich zwischen ≥10 Gew.-% und ≤100 Gew.-% bezogen auf den Polymeranteil der Schicht B liegen. Besonders bevorzugt kann der Anteil an rezykliertem Polyethylenterephthalat in der Schicht B in einem Bereich zwischen ≥15 Gew.-% und ≤90 Gew.-%, ≥20 Gew.-% und ≤80 Gew.-% insbesondere bezogen auf den Polymeranteil der Schicht B liegen.

Neben dem rezykliertem Polyethylenterephthalat kann in der Schicht B ein virginales Polyethylenterephthalat vorgesehen sein. Der Anteil an virginalem PET kann dabei in einem Bereich zwischen ≥0 Gew.-% und ≤90 Gew.-% bezogen auf den Polymeranteil der Schicht B liegen. Besonders bevorzugt kann der Anteil an virginalem Polyethylenterephthalat in der Schicht B in einem Bereich zwischen ≥10 Gew.-% und ≤80 Gew.-%, ≥15 Gew.-% und ≤75 Gew.-% insbesondere bezogen auf den Polymeranteil der Schicht B liegen. Durch das Vorsehen von virginalem PET in der Schicht B kann eine verbesserte Anbindung an die Schichten A erreicht werden.

In einer bevorzugten Ausgestaltung können insbesondere PET basierte Polymermassen innerhalb des Aufbaus einem gesonderten Annealing-/Temperprozess unterzogen werden. Der Annealing-/Temperprozess hilft die in der Platte vorhandenen Spannungen durch die Kalibrierung abzubauen und verbessert derart die Formstabilität. Die anschließende Wärmebehandlung kann beispielsweise in Form weiterer Temperierwalzen erfolgen, die von dem bahnförmigen Extrudat umschlungen werden. Weitere Annealingmöglichkeiten sind temperierte Umluftstrecken oder auch beheizte Wasserbäder, wobei die Annealingtemperatur so gewählt werden sollte, dass es nicht zu einer Nachkristallisierung der Polymermasse führt.

Gemäß einer weiteren Ausgestaltung der Erfindung kann es vorgesehen sein, dass das Schicht B neben dem thermoplastischen Kunststoff einen Füllstoff aufweist, wobei der Füllstoff vorzugsweise ausgewählt ist aus der Gruppe bestehend aus Kreide, nicht asbestöses Silikat, vorzugsweise Magnesiumsilikat, Holzmehl, Blähton, Vulkanasche, Bims, Porenbeton, insbesondere anorganischen Schäumen, Cellulose oder ein Blähmittel aufweist.

Vorzugsweise kann der Anteil an Füllstoff in einem Bereich zwischen ≥1 Gew.-% und ≤60 Gew.-%, insbesondere in einem Bereich zwischen ≥5 Gew.-% und ≤50 Gew.-% bezogen auf die Gesamtmasse des die Schicht B bildenden Materials liegen.

In vorteilhafter Weise ist es durch den Zusatz von Füllstoffen möglich, die Materialeigenschaften des multilaminaren Kunststoffträgermaterials wie beispielsweise dessen spezifisches Gewicht, oder auch dessen Heizwert einzustellen. Letzteres ist insbesondere für die Frage der durch einen auf Basis eines entsprechenden multilaminaren Kunststoffträgers gebildeten Wand-, Decken- oder Bodenbelages und die durch einen solchen in ein Gebäude eingebrachte Brandlast relevant. Allgemein können in Abhängigkeit des gewünschten Anwendungsgebietes und der gewünschten Eigenschaften eines auf Basis eines erfindungsgemäßen multilaminaren Kunststoffträgermaterials gebildeten Paneels die Anteile an thermoplastischem Kunststoffmaterial beziehungsweise Füllstoffmaterial wählbar sein. Dadurch kann eine gute Adaptierbarkeit an das gewünschte Anwendungsgebiet möglich werden.

Besonders bevorzugt kann es vorgesehen sein, dass als Füllstoff in der Schicht B ein Schichtsilikat, wie beispielsweise Talkum, vorgesehen wird. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Somit ist der Feststoffanteil vorteilhafter Weise zumindest durch einen Großteil aus dem mineralischen Stoff Talkum gebildet, wobei dieser Stoff etwa als Pulverform eingesetzt werden kann beziehungsweise in dem Trägermaterial in Form von Partikeln vorliegen kann. Grundsätzlich kann das Feststoffmaterial aus einem pulverförmigen Feststoff bestehen.

Im Rahmen einer bevorzugten Ausgestaltung des Wand- oder Bodenpaneels kann das Paneel Holz und/oder Kreidepartikel mit einer Partikelgröße zwischen ≥ 0 µm und ≤600 µm und einer Partikelgrößenverteilung D₅₀ von ≥ 400 µm aufweisen. Gemäß einer besonders bevorzugten Ausgestaltung der Erfindung besteht das Trägermaterial aus einer Mischung eines PE/PP Blockcopolymers mit Holz. Dabei kann der Anteil des PE/PP Blockcopolymers sowie der Anteil des Holzes zwischen ≥45 Gew.-% und ≤55 Gew.-% liegen. Des Weiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen > 0 µm und ≤ 600 µm mit einer bevorzugten Partikelgrößenverteilung D₅₀ von ≥ 400 µm. Insbesondere kann das Trägermaterial dabei Holz mit einer Partikelgrößenverteilung D₁₀ von ≥ 400 µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Blockcopolymer mit Holzpartikeln der angegeben Partikelgrößenverteilung bereitgestellt. Das Granulat und/oder die Pellets können dabei bevorzugt etwa eine Korngröße in einem Bereich von ≥ 400 µm bis ≤ 10 mm, bevorzugt ≥ 600 µm bis ≤ 10 mm aufweisen, insbesondere ≥ 800 µm bis ≤ 10 mm.

Zur Bestimmung der Partikelgrößenverteilung kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Mittels dieser Methode lassen sich auch die Größenverteilungen der Einsatzstoffe und somit auch die D₅₀ bzw. D₁₀ Werte ermitteln, wobei die Quantile diejenigen Teilchengrößen angeben, ab welchen 50% bzw. 10% der gemessenen Partikel kleiner sind als der angegebene Wert.

Hinsichtlich weiterer technischer Merkmale und Vorteile des Wand- oder Bodenpaneels wird hiermit explizit auf die Beschreibung des Verfahrens, der Vorrichtung, sowie auf die Figuren Bezug genommen.

Die Erfindung ist nachfolgend anhand der Figuren sowie eines Ausführungsbeispiels weiter erläutert.
- Fig. 1: zeigt schematisch eine apparative Ausgestaltung zur Durchführung des erfindungsgemäßen Verfahrens im Querschnitt;
- Fig. 2: zeigt schematisch eine apparative Ausgestaltung zur Durchführung des erfindungsgemäßen Verfahrens in der Aufsicht;
- Fig. 3: zeigt schematisch eine apparative Ausgestaltung zur Durchführung des erfindungsgemäßen Verfahrens in der Aufsicht;
- Fig. 4: zeigt schematisch die Führung geschmolzenen Polymermaterials durch eine Kalibrierwalzenanordnung;
- Fig. 5: zeigt schematisch die Führung geschmolzenen Polymermaterials durch eine Kalibrierwalzenanordnung;
- Fig. 6: zeigt schematisch die Führung geschmolzenen Polymermaterials durch eine Kalibrierwalzenanordnung mit einem vergrößerten Ausschnitt; und
- Fig. 7: zeigt schematisch eine Möglichkeit zur Durchführung des erfindungsgemäßen Verfahrens im Querschnitt.

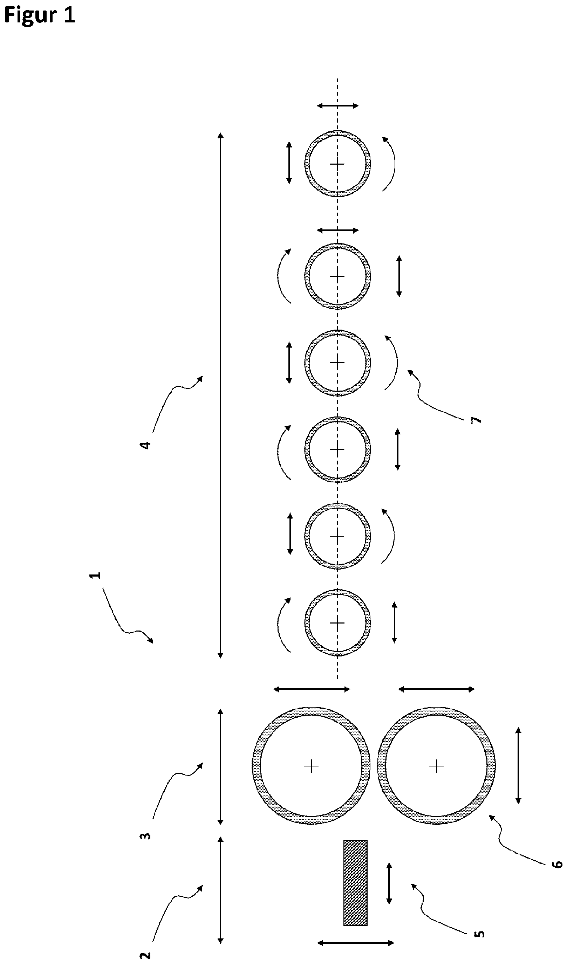

Die Vorrichtung 1 nach Figur 1 ist für ein Verfahren zur Herstellung eines dekorierten Wand- oder Bodenpaneels geeignet. Die Figur 1 zeigt im Querschnitt den möglichen Aufbau der Vorrichtung zur Herstellung dekorierter Paneele 1, wobei in dieser Figur besonders die Baugruppen Extrusionsvorrichtung 2 mit Düse 5, Hauptwalzenpaar 3 und Kalibrierwalzenanordnung 4 dargestellt sind. In dieser Ausführungsform sind 6 Kalibrierwalzen 7 dargestellt, welche sich jeweils unabhängig voneinander in ihren X-, und Y-Positionen steuern lassen. Eine mögliche Drehrichtungsabfolge für die einzelnen Kalibrierwalzen 7 ist durch die Pfeile angedeutet. Die Vorrichtung 1 zeigt schematisch die Extrusionsvorrichtung 2, welche sich in einen Extruder (nicht separat dargestellt) zur thermischen Behandlung von Polymergranulat und der eigentlichen Düse 5 aufteilt. Der aus der Düse austretende geschmolzene Polymerstrang kann durch den Walzenspalt der Hauptwalzenanordnung 3 mit den einzelnen Hauptwalzen 6 geführt werden. Die Höhe des Walzenspalts zwischen den beiden Hauptwalzen 6 ist durch die Bewegung der Hauptwalzen 6 zueinander variabel einstellbar. Nachdem die geschmolzene Polymermasse durch den Hauptwalzenspalt eine erste Formung und gegebenenfalls auch Kühlung erfahren hat, wird der Strang zur Kalibrierwalzenanordnung 4 übergeben. In der Kalibrierwalzenanordnung 4 wird der geschmolzene Polymerstrang weiter in seiner Höhe reduziert oder kalibriert. Der Strang wird dabei durch die Spalte zwischen den einzelnen Kalibrierwalzen 7 geführt und als Funktion des Spaltabstandes in seiner Höhe verändert. Die einzelnen Kalibrierwalzen 7 müssen dabei zueinander nicht immer den gleichen Abstand aufweisen, sodass unterschiedliche Spalthöhen zwischen den Kalibrierwalzen 7 während des Verfahrens einstellbar sind. Die Kalibrierwalzen 7 müssen auch nicht die gleiche Höhe aufweisen, sondern können zueinander auch versetzt angeordnet sein. Dies kann die mechanischen Streckeigenschaften des geschmolzenen Polymerstranges verändern. Nach der Kalibrierung durch die Hauptwalzenanordnung 3 und die einzelnen Kalibrierwalzen 7 kann das kalibrierte und geglättete Material über eine Druckeinheit (nicht dargestellt) mit einem Dekor versehen werden. Des Weiteren kann die dekorierte Oberfläche des Paneels mit einer oder gegebenenfalls weiteren Schichten, wie beispielsweise Schutzschichten, versehen werden.

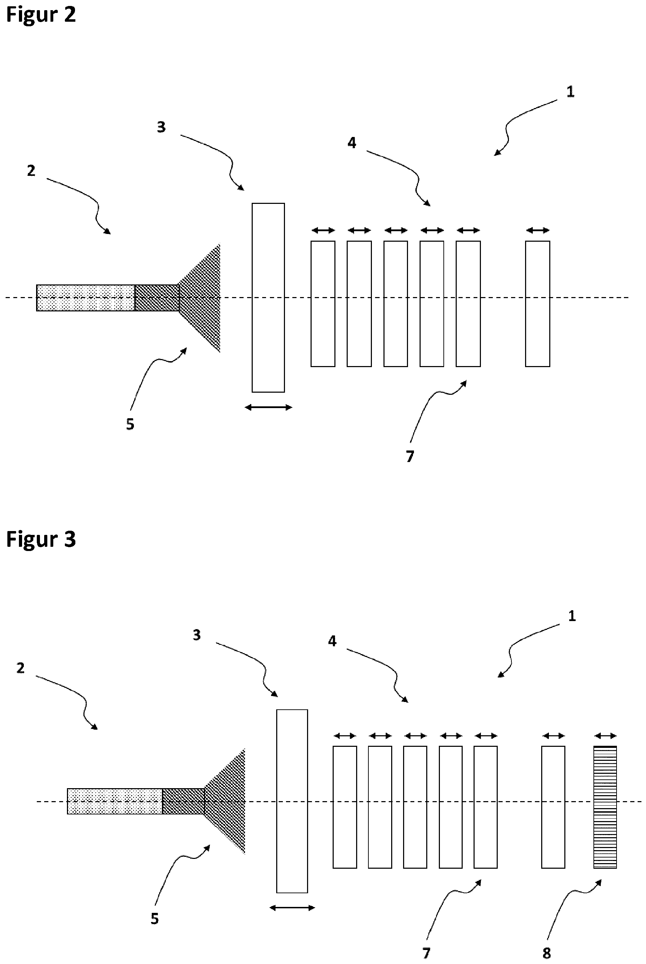

Die Figur 2 zeigt eine Aufsicht auf eine erfindungsgemäße Vorrichtung 1. Dargestellt ist die Extrusionsvorrichtung 2, mit Extruder und Düse, welche einen geschmolzenen Polymerstrang an die Hauptwalzenanordnung 3 übergibt. Der Abstand zwischen Hauptwalzenanordnung 3 und Extrusionsvorrichtung 2 ist variabel und kann, beispielsweise über gesteuerte elektrische Motoren, variiert werden. Nach Durchlauf der geschmolzenen polymeren Masse durch den Spalt der Hauptwalzenanordnung 3, wird der durch die Hauptwalzenanordnung 3 in seiner Höhe und gegebenenfalls schon etwas gekühlte Träger in die Kalibrierwalzenanordnung 4 geführt. Die Kalibrierwalzenanordnung 4 setzt sich aus den einzelnen Kalibrierwalzen 7 zusammen, welche untereinander jeweils Spalte ausbilden, durch welche der ankalibrierte Träger geführt und weiter geformt wird. Die einzelnen Kalibrierwalzen 7 können insgesamt oder jede separat in ihrer relativen Position zueinander gefahren werden. Des Weiteren ist es möglich, dass die einzelnen Kalibrierwalzen 7 insgesamt oder jede separat in ihrer Walzenoberflächentemperatur geregelt werden.

Die Figur 3 zeigt im Wesentlichen die Ausführungsform der Figur 2, wobei hier zusätzlich die Dekoranordnung 8 dargestellt ist. Die Dekoranordnung 8 ist nach den Kalibrierwalzen 7 angeordnet und bringt ein Dekor auf den kalibrierten und gegebenenfalls gekühlten Träger auf.

Die Dekoranordnung 8 kann beispielsweise aus einem Inkjet-Drucker und einer weiteren Einheit bestehen, welche zumindest partiell auf das gedruckte Dekor eine weitere Schutzschicht aufbringt. Des Weiteren ist es möglich, dass kein Drucker, sondern ein schon auf einem Träger aufgebrachtes Dekor verwendet wird, welches beispielsweise über eine Rolle auf den kalibrierten Träger abgelegt wird. Zusätzlich kann an dieser Stelle der Träger noch weiter gekühlt, profiliert oder beispielsweise an den Längsseiten mechanisch bearbeitet werden.

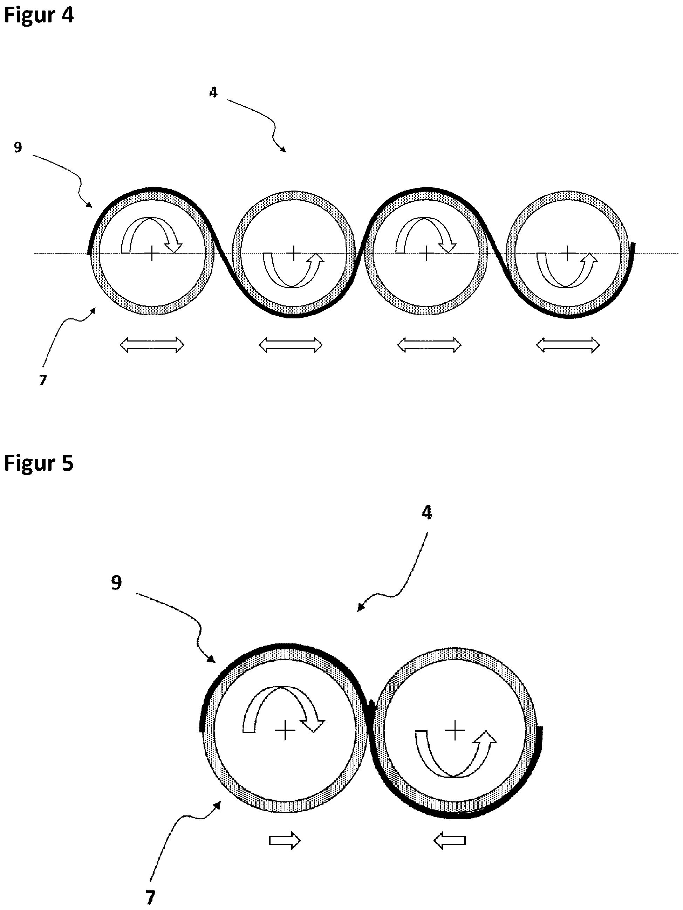

Die Figur 4 zeigt eine mögliche Führung des geschmolzenen polymeren Trägers 9 durch die Kalibrierwalzenspalte. Durch die Auflage auf die Kalibrierwalzen 7 kann der geschmolzene polymere Träger 9 beispielsweise gekühlt werden. In dieser Anordnung der einzelnen Kalibrierwalzen 7 wird der geschmolzene polymere Träger 9 eher durch den mechanischen Zug der Walzen in seiner Dicke verändert. Die einzelnen Kalibrierwalzen 7 liegen zu weit auseinander, auf das der geschmolzene polymere Träger 9 durch den Spalt zwischen den Kalibrierwalzen 7 eine direkte Quetschung oder Stauchung erfahren würde.

Die Figur 5 zeigt eine ähnliche Kalibrierwalzenanordnung 4 mit zwei Kalibrierwalzen 7 wie in der Figur 4, wobei die Kalibrierwalzen 7 enger zusammenstehen und einen Spalt ausbilden, welcher kleiner ist als die Dicke des geschmolzenen polymeren Trägers 9. Dadurch, dass der geschmolzene polymere Träger 9 zumindest partiell dicker ist als der Kalibrierspalt, wird die Höhe des geschmolzenen polymeren Trägers 9 durch den Kalibrierspalt zwischen den Kalibrierwalzen 7 vergleichmäßigt.

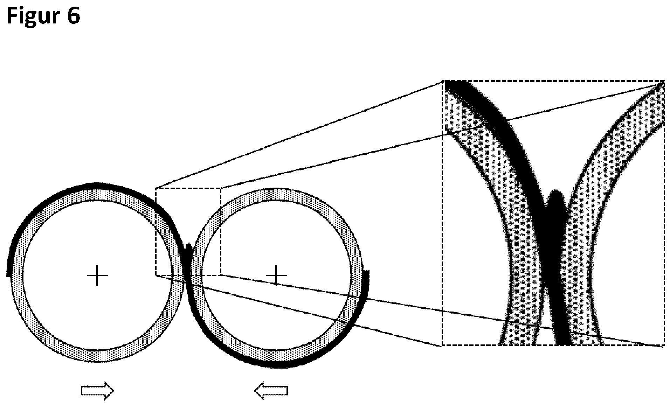

Die Figur 6 zeigt noch einmal den Kalibrierwalzen-Ausschnitt der Figur 5 zusammen mit einem vergrößerten Ausschnitt. Im vergrößerten Ausschnitt ist zu erkennen, dass sich überschüssiges Material des geschmolzenen polymeren Trägers 9 am Beginn des Kalibrierspaltes aufschiebt. Dadurch wird die Höhe des geschmolzenen polymeren Trägers 9 an die Höhe des Kalibrierspaltes angepasst. Durch den Abstand der Kalibrierwalzen 7 lässt sich die Höhe des Kalibrierspaltes und somit die Trägerhöhe einstellen. Erfindungsgemäß vorteilhaft ist, dass die Kalibrierwalzen 7 so eng zusammenstehen, dass möglichst wenig Umgebungsluft zwischen die Kalibrierwalzen 7 und den geschmolzenen polymeren Träger 9 gelangen kann. Durch den engen Spaltdurchlauf wird sichergestellt, dass möglichst wenig zusätzliche Luft in die Trägeroberfläche gepresst wird. Letzteres kann zu einer verbesserten kalibrierten Trägeroberfläche beitragen.

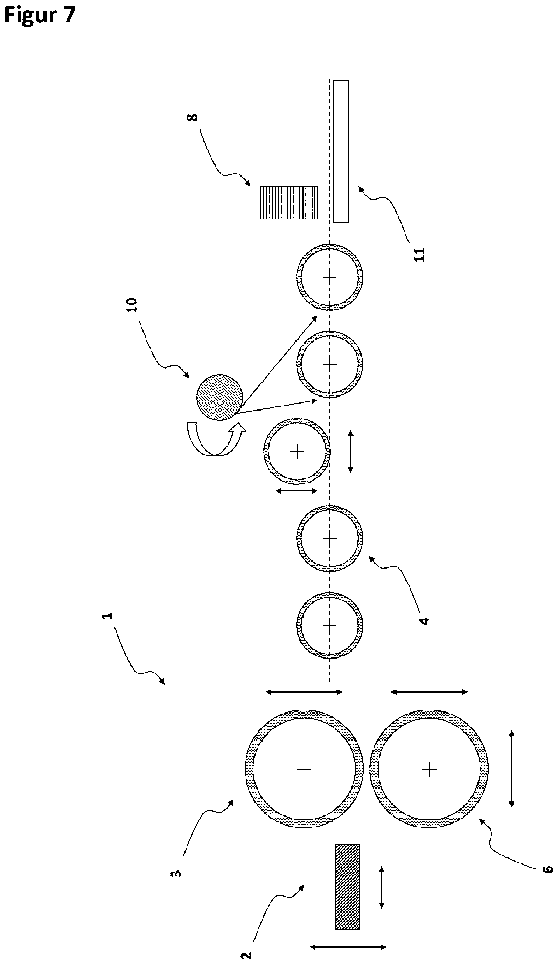

Die Figur 7 zeigt eine weitere erfindungsgemäße Ausgestaltung einer Vorrichtung 1 zur Herstellung dekorierter Paneele. Die Vorrichtung 1 weist ebenfalls eine Extrusionsvorrichtung 2, beispielsweise mit eine Breitschlitzdüse und einem Extruder, auf. Die geschmolzene polymere Masse wird durch die Düse extrudiert und gelangt über den Spalt der Hauptwalzen-3 zu der Kalibrierwalzenanordnung 4 mit den einzelnen Kalibrierwalzen 7. In dieser Figur ist dargestellt, dass sich die einzelnen Kalibrierwalzen 7 nicht zwangsläufig auf eine Höhe zueinander befinden müssen. Durch die Auslenkung einer Kalibrierwalze 7 in der Höhe können beispielsweise die mechanischen Kräfte und auch die Kühleigenschaften über eine Luftstrecke verändert werden. Des Weiteren zeigt die Figur, dass innerhalb der Kalibrierwalzenanordnung 4 mit den unterschiedlichen Kalibrierwalzen 7 eine zusätzliche Schicht 10 aufgebracht werden kann, welche beispielsweise als Rollenware vorliegt und an den unterschiedlichsten Stellen der Kalibrierwalzenanordnung 4 eingebracht werden kann. Die zusätzliche Schicht kann beispielsweise ein Primer oder ein Dekoruntergrund sein. Durch das Auftragen der zusätzlichen Schicht 10 innerhalb der Kalibrierwalzenanordnung 4, kann eine zusätzliche mechanische Behandlung der Schicht durch die Kalibrierwalzen 7 erfolgen, welches zu einer besseren Haftung der weiteren Schicht auf den Träger führen kann. Des Weiteren kann derart sichergestellt werden, dass durch das Aufbringen der zusätzlichen Schicht 10 der Träger in der Höhe nicht von den gewünschten Dimensionen abweicht, da sowohl Träger wie auch zusätzliche Schicht 10 durch den letzten Kalibrierspalt laufen. Nach dem Aufbringen der zusätzlichen Schicht 10, kann durch die Dekoranordnung 8, zumindest partiell, ein Dekor und eine Schutzschicht auf den kalibrierten Träger aufgebracht werden. Weiterhin ist es möglich, dass der Träger über weitere Mittel 11 entweder weiter definiert temperiert/gekühlt oder mechanisch nachbearbeitet wird. Dazu können sich als weitere Mittel 11 Kühl- oder Temperierflächen oder mechanische Fräsen zur weiteren Profilierung, beispielsweise der Trägerkanten, eignen.

### Bezugszeichen:

- 1: Vorrichtung
- 2: Extrusionsvorrichtung
- 3: Hauptwalzenanordnung
- 4: Kalibrierwalzenanordnung
- 5: Düse
- 6: Hauptwalze
- 7: Kalibrierwalze
- 8: Druckeranordnung
- 9: geschmolzener polymerer Träger
- 10: zusätzliche Schicht
- 11: weitere Nachbearbeitung

## Patentansprüche

1. Verfahren zur Herstellung eines dekorierten Wand- oder Bodenpaneels, aufweisend die Verfahrensschritte:
a) Bereitstellen einer geschmolzenen Polymermasse;
b) Extrudieren der geschmolzenen Polymermasse durch eine Düse (5);
c) Kalibrieren der geschmolzenen Polymermasse unter Ausbildung eines plattenförmigen Trägers (9) mittels einer Anordnung aus mehreren rotierbaren Walzen (6, 7), wobei die einzelnen Walzen (6, 7) über- oder hintereinander angeordnet sind und jede einzelne Walze (6, 7) mit benachbarten Walzen (6, 7) mindestens einen Kalibrierspalt ausbildet durch welchen die geschmolzene Polymermasse (9) geführt wird, wobei die Kalibrierspalt-Höhen über eine horizontale und/oder vertikale Bewegung einzelner Walzen (6, 7) während des Herstellungsprozesses variabel einstellbar sind;
d) Aufbringen eines eine Dekorvorlage nachbildenden Dekors auf zumindest einen Teilbereich des zumindest teilweise kalibrierten Trägers, und
e) Aufbringen einer Schutzschicht auf zumindest einen Teilbereich des Dekors.

2. Verfahren gemäß Anspruch 1, wobei das Kalibrieren in Verfahrens schritt c) unter Verwendung mindestens eines Hauptwalzenpaares (3) aus zwei Walzen mit größerem Durchmesser und mindestens dreier hintereinander angeordneter Kalibrierwalzen (7) mit im Vergleich zum Hauptwalzenpaar (6) kleineren Durchmesser erfolgt.

3. Verfahren gemäß Anspruch 2, wobei die Höhe des Kalibrierspalts des Hauptwalzenpaares (6) H_{H} sich um größer oder gleich 10% und kleiner oder gleich 50 % von den Höhen der Kalibrierspalte der Kalibrierwalzen (7) H_{K} unterscheidet.

4. Verfahren gemäß einem der Ansprüche 2 oder 3, wobei die Höhe des letzten und/oder des vorletzten Kalibrierspaltes (7) so gewählt wird, dass der Träger um einen Faktor von kleiner oder gleich 10% und größer oder gleich 3% in seiner Höhe komprimiert wird.

5. Verfahren gemäß einem der vorhergehenden Ansprüche, wobei der Verfahrens schritt d) vor dem Aufbringen des Dekors zusätzlich noch das Aufbringen eines Dekoruntergrund auf zumindest einen Teilbereich des Trägers umfasst.

6. Verfahren gemäß Anspruch 5, wobei zumindest das Aufbringen des Dekoruntergrundes auf einen Teilbereich des Trägers im Verfahrensschritt d) vor der letzten Walze der Walzenanordnung (7) des Verfahrensschritts c) erfolgt.

7. Verfahren gemäß einem der Ansprüche 2 bis 6, wobei die Walzenanordnung neben dem Hauptwalzenpaar (6) noch mindestens vier weitere Kalibrierwalzen (7) aufweist, wobei einer der Walzenspalte der Kalibrierwalzen (7) isobar gefahren wird.

8. Verfahren gemäß einem der Ansprüche 2 bis 7, wobei die Haupt- (6) und die Kalibrierwalzen (7) temperierbar ausgerüstet sind und die temperierbare Oberfläche der Kalibrier- (7) im Vergleich zu den Hauptwalzen (7) um einen Faktor von größer oder gleich 1,1 bis zu kleiner oder gleich 2,5 größer ist.

9. Vorrichtung zur Herstellung eines dekorierten Wand- oder Bodenpaneels, **dadurch gekennzeichnet, dass** die Vorrichtung Mittel zum Durchführen des Verfahrens nach einem der Ansprüche 1 bis 8 aufweist.

10. Wand- oder Bodenpaneel, hergestellt gemäß einem Verfahren nach einem der Ansprüche 1-8.

11. Wand- oder Bodenpaneel gemäß Anspruch 10, wobei das Trägermaterial des Paneels ein Matrixmaterial und ein Feststoffmaterial aufweist, wobei das Matrixmaterial in einer Menge, bezogen auf das Trägermaterial, von ≥ 25 Gew.-% bis ≤ 55 Gew.-% vorliegt und wobei das Feststoffmaterial in einer Menge, bezogen auf das Trägermaterial, von ≥ 45 Gew.-% bis ≤ 75 Gew.-% vorliegt, und wobei das Matrixmaterial und das Feststoffmaterial gemeinsam, bezogen auf das Trägermaterial, in einer Menge von ≥ 95 Gew.-% vorliegen, wobei, dass das Feststoffmaterial zu wenigstens 50 Gew.-% bezogen auf das Feststoffmaterial, gebildet ist aus einer Feststoffzusammensetzung bestehend aus wenigstens einem ersten Schichtsilikatpulver und einem zweiten Schichtsilikatpulver, und das Matrixmaterial zu wenigstens 50 Gew.-% bezogen auf das Matrixmaterial, gebildet ist durch eine Kunststoffzusammensetzung bestehend aus einem Homopolymer und wenigstens einem ersten Copolymer und einem zweiten Copolymer.

12. Wand oder Bodenpaneel gemäß Anspruch 10, wobei das Paneel ein multilaminares Kunststoffträgermaterial mit einer Mehrzahl N von Schichtfolgen A-B-A aufweist, wobei Schicht A einen ersten thermoplastischen Kunststoff und Schicht B einen zweiten thermoplastischen Kunststoff aufweist und wobei der erste thermoplastische Kunststoff ein virginaler Kunststoff und der zweite Kunststoff ein rezyklierter Kunststoff ist, und wobei 250 ≥ N ≥ 2.
